# EUROPEAN PATENT APPLICATION

(11) **EP 4 057 054 A1**
(43) Date of publication of application: **14.09.2022**
(21) Application number: 21191555.8
(22) Date of filing: 16.08.2021
(51) Int. Cl.: G02C 9/00, G02B 27/01

(54) **HEAD MOUNTED DISPLAY**

(30) Priority: 10.03.2021 CN 202110260978
(71) Applicant: JRD Communication (Shenzhen) Ltd, Shenzhen, Guangdong 518052 (CN)
(72) Inventor: SHI, Tianyuan, Shenzhen, 518052 (CN); WANG, Jianwei, Shenzhen, 518052 (CN); ZHU, Yan, Shenzhen, 518052 (CN)
(74) Representative: Murgitroyd & Company

(57) **Abstract**

The present disclosure provides a head mounted display that comprises display lenses, a frame body and at least one magnetic attraction part. The display lenses are configured to display augmented reality or virtual reality image content. The frame body comprises a carrying part configured to carry the display lenses.-The at least one magnetic attraction part is disposed on the frame body and configured to magnetically attract a first lens unit or a second lens unit, so that the first lens unit or the second lens unit is attached to the frame body. The first lens unit comprises first magnetic elements, and the second lens unit comprises second magnetic elements.

## Description

### FIELD OF THE INVENTION

The present disclosure relates to a head mounted display, more particularly, to a head mounted display that can quickly adjust a visual aid function.

### BACKGROUND

Virtual reality (VR) technology is currently a popular display technology, which mainly combines a computer image system and various display control devices to generate three-dimensional virtual images. When experiencing virtual reality, a head mounted display (HMD) is usually used to completely cover the visual range of the eye. At this time, users cannot see the real environment, but can only see virtual images presented by the head mounted displays, and most of them will interact with the multimedia content in the virtual world by operating controllers. Virtual reality is usually applied to games and simulation training. As long as a trainee wears a head mounted display to enter the virtual world, the dangers of real operation training can be avoided or the expensive equipment cost can be avoided. After becoming proficient in the virtual reality world, the trainee then goes back to the real world for real training. Take a virtual reality simulator for pilot training as an example. The pilot wears a head mounted display on his/her head and can not see the real surrounding environment at all. The pilot can only see the virtual world generated in the computer, and uses a joystick to simulate control and practice flight.

Different from virtual reality technology, the technical principle of augmented reality (AR) is to take a real picture through a camera and to combine it with a certain recognition and positioning technology, so that the real scene on the screen can be augmented with the object(s) virtually generated by the computer. Users will see the real world and the co-exist virtual content at the same time. For example, some car devices are equipped with a reversing image system, which presents images that are real shot images combined with virtual car images, so that users can smoothly complete the parking based on the augmented reality. In addition, there are some applications that combine virtual reality and augmented reality technologies. These applications are collectively referred to as mixed reality (MR).

The augmented reality glasses currently on the market have poor applicability to the myopia group. Usually, this type of product itself does not have diopters. Therefore, when users with myopia utilize augmented reality glasses, users can only see the augmented reality images clearly but cannot see the real scenes clearly because they cannot wear their own myopia glasses at the same time. Even though some manufacturers try to replace augmented reality glasses with lenses with myopia diopter, they must customize the products or increase the quantified costs to provide users with various diopters options.

Additionally, even if the augmented reality glasses are customized, the diopter of the lenses cannot be switched. When the user's nearsightedness becomes worse or wants to lend the augmented reality glasses to a friend for viewing, arbitrary switch cannot be achieved because most of the myopic lenses are fixed and can not be detached.

In addition to the above insufficient adaptability to users' eyesight, the appearance of augmented reality and virtual reality devices has also become an issue that cannot be ignored. E-sports and webcasting have become emerging industries that can bring huge business opportunities. Therefore, when professional players or show hosts are wearing augmented reality or virtual reality devices, they expect the devices to have a more updated and bold appearance. However, such demand requires further customization of the entire device, thus causing an increase in the cost of the consumer or manufacturer.

In summary, there is a need to provide augmented reality or virtual reality glasses that can quickly replace myopic lenses. The augmented reality or virtual reality glasses currently on the market basically only have one frequently used diopter power, which is only suitable for non-myopia people. For people with different degrees of myopia, the usage rate is not high. This also in turn makes them basically unable to see the content clearly when wearing the augmented reality or virtual reality glasses, or can only see the augmented reality images nearby clearly but cannot see the real scenes far away clearly. As such, the present disclosure provides augmented reality or virtual reality glasses having a myopia adjustment function to resolve the above problems.

### SUMMARY

One objective of the present disclosure is to provide a head mounted display that is convenient to use and stable, and the color of the frame and the color of the lenses can be changed, so as to solve the problems faced by the related art.

In greater detail, the present disclosure provides augmented reality or virtual reality glasses that can quickly replace different lens units by means of magnetic attraction, thus realizing the convenient detachment and replacement of the myopic lenses inside the augmented reality or virtual reality glasses. The practicality of augmented reality or virtual reality glasses is improved.

The present disclosure provides a head mounted display that comprises display lenses, a frame body and at least one magnetic attraction part. The display lenses are configured to display augmented reality or virtual reality image content. The frame body comprises a carrying part configured to carry the display lenses.-The at least one magnetic attraction part is disposed on the frame body and configured to magnetically attract a first lens unit or a second lens unit, so that the first lens unit or the second lens unit is attached to the frame body. The first lens unit comprises first magnetic elements, and the second lens unit comprises second magnetic elements.

Optionally, the magnetic attraction part is made of a powerful magnet.

Optionally, the at least one magnetic attraction part is located on the carrying part.

Optionally, each of the first lens unit and the second lens unit comprises sunglass lenses, polarized lenses or myopia lenses.

Optionally, the first lens unit and the second lens unit have metal frames, and the frame body is made of a plastic material.

Optionally, the first lens unit and the second lens unit have frames of different colors.

Optionally, the head mounted display further comprises;
a first arm disposed on one side of the frame body and pivotally connected to the frame body, the first arm rotating away from the frame body during an unfolding process and rotating towards the frame body during a folding process; and
a second arm disposed on another side of the frame body and pivotally connected to the frame body, the second arm rotating away from the frame body during the unfolding process and rotating towards the frame body during the folding process.

Optionally, the head mounted display is a virtual reality display device and further comprises: a headband configured to be fixed to two sides of the frame body; a forehead pad disposed on an inner side of the frame body; and a cover configured to block external light rays.

Optionally, each of the display lenses, the first lens unit and the second lens unit is composed of at least one of glass, resin and polycarbonate (PC).

Optionally, a chip is built in the frame body, and the chip further comprises: a wireless module configured to receive a wireless signal; a processor configured to calculate data; a memory configured to store the data; and a flash memory configured to temporarily store the data.

Optionally, a battery is built in the main body of the lens frame to supply power to the chip.

The present disclosure has the following advantages as compared with the related art:
According to the present disclosure, a head mounted device with a brand new appearance is formed through the mutual magnetic attraction between the frame body and the lens unit. The lens unit can have a variety of different frame designs. The present disclosure can easily achieve the objective of changing the appearance of the product under the premise of not customizing the appearance of the entire head mounted device. As a result, the practicability of the product is greatly improved.

The present disclosure at least has the following beneficial effects: Through the magnetic attraction design between the frame body and the lens unit, if the user needs to adjust the myopia diopter when wearing augmented reality or virtual reality glasses, the user can add or replace the required lens unit. In addition, when the user's myopia diopter changes, there is no need to purchase a new device, and only replacing the lens unit is enough. In addition to that, the lens unit can further adopt sunglass lenses, sunglass lenses having diopters, or sunglass lenses having a polarizing effect in response to the different needs of the users.

It can be understood from the above that the present disclosure can facilitate the user to adjust the myopia diopter of the augmented reality or virtual reality glasses through simple installation and detachment depending on needs. As a result, the practical value of the augmented reality or virtual reality glasses is improved.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
Fig. 1 is a schematic diagram of a head mounted display according to one embodiment of the present disclosure.
Fig. 2 is a schematic diagram of a head mounted display according to another embodiment of the present disclosure.
Fig. 3 is a schematic diagram of a chip built in the head mounted display in Fig. 1 according to one embodiment of the present disclosure.
Fig. 4 is a schematic diagram of the head mounted display in Fig. 1 combined with different lens units.

### DESCRIPTION OF THE EMBODIMENTS

The description of the following embodiments refers to the attached drawings to illustrate specific embodiments that can be implemented in the present application. The directional terms mentioned in this disclosure, such as "up", "down", "front", "rear", "left", "right", "inner", "outer", "side", etc., are for reference only. Therefore, the directional terms used are used to illustrate and understand the application, rather than to limit the application.

The disclosure is described in particular with the following examples. These examples are only used as examples, because for those who are familiar with the art, without departing from the spirit and scope of the disclosure, various changes and modifications can be made. Therefore, the protection scope of this disclosure shall be subject to those defined by the appended claims. Throughout the specification and claims, unless the content clearly specifies otherwise, the meanings of "a" and "the" include this type of description including "one or at least one" of the component or component. In addition, as used in this disclosure, unless it is obvious from the specific context that the plural is excluded, the singular article also includes the description of the plural components or ingredients. Moreover, when applied in this description and all the claims below, unless the content clearly specifies otherwise, the meaning of "in" may include "in" and "on". The terms used throughout the specification and claims, unless otherwise specified, usually have the usual meaning of each term used in this field, in the content disclosed here, and in the special content. Some terms used to describe this disclosure will be discussed below or elsewhere in this specification to provide practitioners with additional guidance on the description of this disclosure. The examples anywhere in the entire specification, including the use of examples of any terms discussed herein, are for illustration only, and certainly do not limit the scope and meaning of the disclosure or any exemplified terms. Likewise, the present disclosure is not limited to the various embodiments proposed in this specification.

The term "approximately", "about" or "approximately" as used herein should generally mean within 20% of the given value or error range, preferably within 10%. In addition, the numbers provided herein may be approximate, which means that unless otherwise stated, the words "about", "about" or "approximately" can be used to express. When the quantity, concentration, or other values or parameters have specified ranges, preferred ranges, or upper and lower ideal values listed in the table, it shall be regarded as a special disclosure of all ranges constituted by any pairs of upper and lower limits or ideal values, regardless of the range. Whether the scope of the description is disclosed separately. For example, if a certain length of the disclosure range is X cm to Y cm, it should be regarded as the disclosure length is H cm and H can be any real number between X and Y.

In addition, "electrical coupling" or "electrical connection" herein includes any direct and indirect electrical connection means. For example, if it is described that a first device is electrically coupled to a second device, it means that the first device can be directly connected to the second device, or indirectly connected to the second device through other devices or connection means. The second device. In addition, if you describe the transmission and provision of electrical signals, those who are familiar with this art should understand that the transmission of electrical signals may be accompanied by attenuation or other non-ideal changes, but if the source and receiving end of the electrical signal transmission or provision are not special Stated that, in essence, it should be regarded as the same signal. For example, if the electrical signal S is transmitted (or provided) from the terminal A of the electronic circuit to the terminal B of the electronic circuit, a voltage may be generated through the source and drain terminals of the transistor switch and/or possible stray capacitance However, if the purpose of this design is not to deliberately use the attenuation or other non-ideal changes produced during transmission to achieve certain specific technical effects, the electrical signal S at the end A and the end B of the electronic circuit should be regarded as essentially the same signal.

It can be understood that the terms "including", "having", "containing", etc. as used herein are open-ended terms, meaning including but not limited to. In addition, any embodiment or claim of the present invention does not have to achieve all the objectives or advantages or features disclosed in the present invention. In addition, the abstract part and title are only for the purpose of assisting the search of patent documents, and are not used to limit the scope of the claims.

The following will clearly and completely describe the technical solutions in the embodiments of the present application with reference to the drawings in the embodiments of the present application. Obviously, the described embodiments are only a part of the embodiments of the present application, rather than all the embodiments. Based on the embodiments in this disclosure, all other embodiments obtained by those skilled in the art without creative work shall fall within the protection scope of this disclosure. In addition, it should be understood that the specific implementations described here are only used to illustrate and explain the application, and are not used to limit the application. In this disclosure, unless otherwise stated, the directional words used such as "upper" and "lower" generally refer to the upper and lower directions of the device in actual use or working state, and specifically refer to the drawing directions in the drawings. The terms "inner" and "outer" refer to the outline of the device.

Please refer to the drawings in the drawings, where the same component symbols represent the same components. The following description is based on the illustrated specific embodiments of the present invention, and should not be construed as limiting other specific embodiments of the present invention that are not described in detail herein.

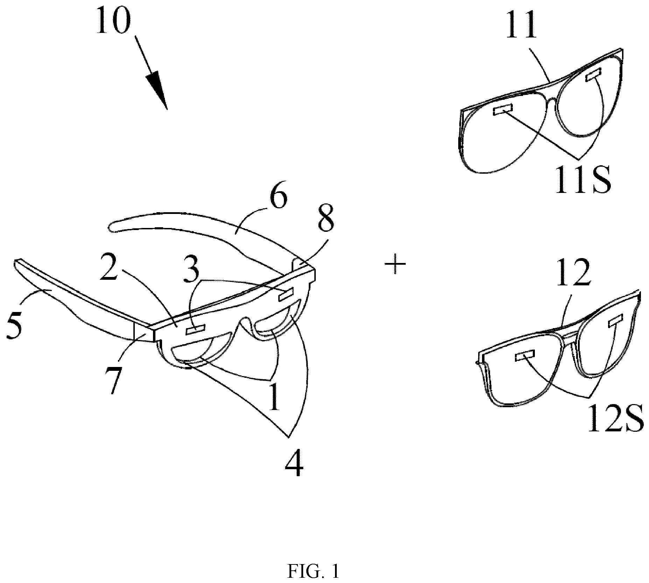

A description is provided with reference to Fig. 1. Fig. 1 is a schematic diagram of a head mounted display 10 according to one embodiment of the present disclosure. The head mounted display 10 comprises display lenses 1, a frame body 2, at least one magnetic attraction part 3 (in the present embodiment, they are disposed at two positions), a first arm 5 and a second arm 6. The display lenses 1 are configured to display augmented reality or virtual reality image content. Since in the present embodiment user's vision is open when wearing the head mounted display 10, it is more suitable for viewing augmented reality image content. The frame body 2 comprises a carrying part 4 to carry the display lenses 1. For example, the carrying part 4 may have reserved slots or openings. The magnetic attraction part 3 is disposed on the frame body 2 and is configured to magnetically attract a first lens unit 11 or a second lens unit 12, so that the first lens unit 11 or the second lens unit 12 is attached to the frame body 2. The first lens unit 11 comprises first magnetic elements 11S, and the second lens unit 12 comprises second magnetic elements 12S. Although only two lens units are described above, the head mounted display according to the present disclosure can switch between more lens units depending on practical needs and is not limited to the examples in the specification.

The magnetic attraction part 3 is made of a powerful magnet. In some variation embodiments, the magnetic attraction part 3 may be a magnet only with a general level of magnetic force, but the first magnetic elements 11S and the second magnetic elements 12S are configured as powerful magnets.

The at least one magnetic attraction part 3 is located on the carrying part 4, but the present disclosure is not limited to this. As long as the first magnetic elements 11S and the second magnetic elements 12S can be attracted to fix the first lens unit 11 and the second lens unit 12, the magnetic attraction part 3 may be disposed at other positions on the frame body 2, such as a side position or a bottom position of the carrying part 4.

Each of the first lens unit 11 and the second lens unit 12 comprises sunglass lenses, polarized lenses or myopia lenses. In this manner, the insufficient adaptability to users' eyesight is well improved, or a user can still have a clear and comfortable field of vision when the head mounted display 10 needs to be used in a strong light environment.

The first lens unit 11 and the second lens unit 12 have metal frames, and the frame body 2 is made of a plastic material. As a result, the weight is transferred to the first lens unit 11 and the second lens unit 12 to a large extent. When the user wears the head mounted display 10 but does not attract the first lens unit 11 and the second lens unit 12, the head or neck does not feel too much pressure.

The first lens unit 11 and the second lens unit 12 have frames of different colors. In this manner, the appearance requirements of augmented reality and virtual reality devices are well fulfilled. Since e-sports and webcasting have become emerging industries that can bring huge business opportunities, public figures, such as live broadcasters or show hosts, etc., when wearing augmented reality or virtual reality devices, expect the devices to have better visual effects. The present disclosure can conveniently improve the overall appearance of the head mounted display 10 without further customizing the entire head mounted display 10. As a result, the manufacturing cost of the manufacturer or the purchase cost of the consumer can be reduced. In addition to that, under the circumstances that only the lens unit (for example, the first lens unit 11) is damaged, only another lens unit (for example, the first lens unit 11) needs to be purchased instead of purchasing the entire head mounted display 10.

The frame body 2 has a signal interface (not shown in the figure) configured for electrical connection to signal lines. For example, the signal interface may be used to connect an HDMI cable or a 3.5mm audio cable.

The first arm 5 is disposed on one side of the frame body 2 and is pivotally connected to the frame body 2 through a pivoting part 7. The first arm 5 rotates away from the frame body 2 during an unfolding process and rotates towards the frame body 2 during a folding process. Similarly, the second arm 6 is disposed on another side of the frame body 2 and is pivotally connected to the frame body 2 through a pivoting part 8. The second arm 6 rotates away from the frame body 2 during the unfolding process and rotates towards the frame body 2 during the folding process. It is noted that in the present disclosure the first arm 5, the second arm 6 and the frame body 2 are not limited to being combined only through pivoting, and the present disclosure does not exclude other designs that can allow the head mounted display 10 to fold and unfold.

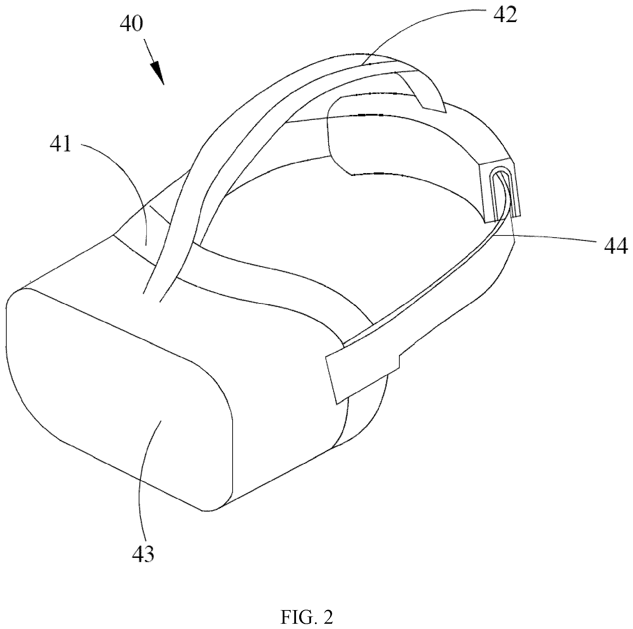

A head mounted display is a virtual reality display device. A description is provided with reference to Fig. 2. A head mounted display 40 of Fig. 2 comprises a forehead pad 41, headbands 42, 44, and a cover 43. The forehead pad 41 is disposed on an inner side of the frame body 2, so that pressure on a user's head can be reduced when wearing the head mounted display 40. Two ends of the headband 42 are respectively fixed to two sides of the frame body 2 for fixing the head mounted display 40 to the user's head. The headband 44 is further fixed to a rear end by surrounding a top of the head. The cover 43 is made of an opaque material and is configured to block external light rays, so that the user has a better experience when viewing virtual reality content. The head mounted display 40 similarly has lenses that are attached to the frame body through magnetic attraction (but is blocked by the cover 43 in Fig. 2 and not shown). If the lenses to be attached are integrally formed with the cover 43, magnetic elements may be disposed on the cover 43 itself to attract the frame body (not shown in the figure).

Each of the display lenses 1, the first lens unit 11 and the second lens unit 12 may be composed of at least one of glass, resin and polycarbonate (PC). Each of the above lens materials has its own advantages and disadvantages.

The head mounted display 10 further comprises a six-axis transducer (not shown in the figure) built in the frame body 2, and is configured to detect displacements of the head mounted display 10 in six-axis directions. In greater detail, six-axis spatial parameters comprise an X-coordinate, a Y-coordinate, a Z-coordinate, a rotation angle around the X-axis, a rotation angle around the Y-axis and a rotation angle around the Z-axis, which are respectively used to measure data of moving forward and backward along the X axis, moving left and right along the Y axis, moving up and down along the Z axis, rotating around the X axis, rotating back and forth around the Y axis, and rotating around the Z axis left and right by the head mounted display 10.

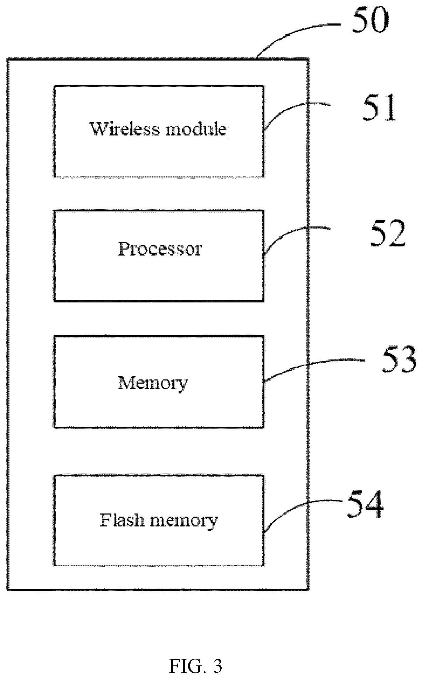

A description is provided with reference to Fig. 3. A chip 50 is built in the frame body 2, and the chip 50 further comprises a wireless module 51, a processor 52, a memory 53 and a flash memory 54. The wireless module 51 is configured to receive a wireless signal (wireless technology such as Wi-Fi or Bluetooth, etc.). The processor 52 is configured to calculate data. The memory 53 is configured to store the data, and the flash memory 54 is configured to temporarily store the data. For example, the head mounted display 10 itself can have computing capabilities and does not have the necessity of further signal connection (wired or wireless) to a desktop computer or a notebook computer. However, the head mounted display 10 may only have an image display function and does not have computing capabilities, but can obtain image data by coupling the signal connection (wired or wireless) to the desktop computer or the notebook computer.

A battery (not shown in the figure) is built in the frame body 2 of the head mounted display 10, and is configured to supply power to the chip 50. However, the head mounted display 10 may be designed to be powered by a dry battery, or powered by an external power cord.

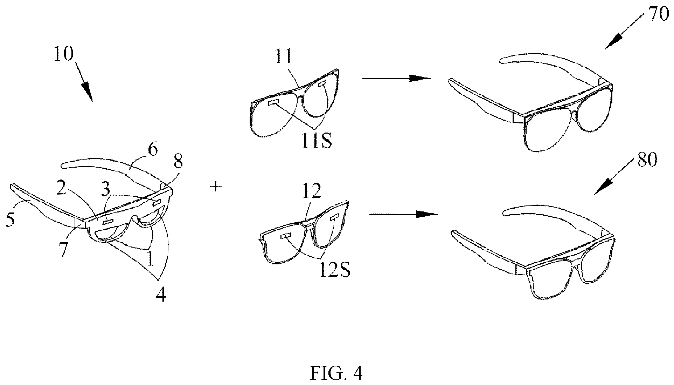

A description is provided with reference to Fig. 4. Fig. 4 is a schematic diagram of the head mounted display 10 in Fig. 1 combined with different lens units. As shown in Fig. 4, the head mounted display 10 is combined with the first lens unit 11 and the second lens unit 12 to respectively form a first completed form 70 and a second completed form 80. The first completed form 70 and the second completed form 80 may have different appearance designs and different lens materials.

The present disclosure has the following advantages as compared with the related art:
According to the present disclosure, a head mounted device with a brand new appearance is formed through the mutual magnetic attraction between the frame body and the lens unit. The lens unit can have a variety of different frame designs. The present disclosure can easily achieve the objective of changing the appearance of the product under the premise of not customizing the appearance of the entire head mounted device. As a result, the practicability of the product is greatly improved.

The present disclosure at least has the following beneficial effects: Through the magnetic attraction design between the frame body and the lens unit, if the user needs to adjust the myopia diopter when wearing augmented reality or virtual reality glasses, the user can add or replace the required lens unit. In addition, when the user's myopia diopter changes, there is no need to purchase a new device, and only replacing the lens unit is enough. In addition to that, the lens unit can further adopt sunglass lenses, sunglass lenses having diopters, or sunglass lenses having a polarizing effect in response to the different needs of the users.

In summary, the present disclosure can facilitate the user to adjust the myopia diopter of the augmented reality or virtual reality glasses through simple installation and detachment depending on needs. As a result, the practical value of the augmented reality or virtual reality glasses is improved.

In the above-mentioned embodiments, the description of each embodiment has its own emphasis. For parts that are not described in detail in an embodiment, reference may be made to related descriptions of other embodiments. The embodiments described above are only a part of the embodiments of the present invention, rather than all the embodiments. Based on the embodiments of the present invention, all other embodiments obtained by those skilled in the art without creative work, except for such designs consistent with the embodiments of the present invention mentioned in the embodiments of the present invention, belong to the present invention. The scope of protection.

The present disclosure is described in detail in accordance with the above contents with the specific preferred examples. However, this present disclosure is not limited to the specific examples. For the ordinary technical personnel of the technical field of the present disclosure, on the premise of keeping the conception of the present disclosure, the technical personnel can also make simple deductions or replacements, and all of which should be considered to belong to the protection scope of the present disclosure.

## Claims

1. A head mounted display (10) **characterized in that** the head mounted display (10) comprises:
display lenses (1) configured to display augmented reality or virtual reality image content;
a frame body (2) comprising a carrying part (4) configured to carry the display lenses (1); and
at least one magnetic attraction part (3) disposed on the frame body (2) and configured to magnetically attract a first lens unit (11) or a second lens unit (12), so that the first lens unit (11) or the second lens unit (12) is attached to the frame body (2), wherein the first lens unit (11) comprises first magnetic elements (11S), and the second lens unit (12) comprises second magnetic elements (12S).

2. The head mounted display (10) as claimed in claim 1, **characterized in that** the magnetic attraction part (3) is made of a powerful magnet.

3. The head mounted display (10) as claimed in claim 1, **characterized in that** the at least one magnetic attraction part (3) is located on the carrying part (4).

4. The head mounted display (10) as claimed in claim 1, **characterized in that** each of the first lens unit (11) and the second lens unit (12) comprises sunglass lenses, polarized lenses or myopia lenses.

5. The head mounted display (10) as claimed in claim 1, **characterized in that** the first lens unit (11) and the second lens unit (12) have metal frames, and the frame body (2) is made of a plastic material.

6. The head mounted display (10) as claimed in claim 1, **characterized in that** the first lens unit (11) and the second lens unit (12) have frames of different colors.

7. The head mounted display (10) as claimed in claim 1, **characterized in that** the head mounted display further comprises;
a first arm (5) disposed on one side of the frame body (2) and pivotally connected to the frame body (2), the first arm (5) rotating away from the frame body (2) during an unfolding process and rotating towards the frame body (2) during a folding process; and
a second arm (6) disposed on another side of the frame body (2) and pivotally connected to the frame body (2), the second arm (6) rotating away from the frame body (2) during the unfolding process and rotating towards the frame body (2) during the folding process.

8. The head mounted display (10) as claimed in claim 1, **characterized in that** the head mounted display is a virtual reality display device and further comprises:
a headband (42, 44) configured to be fixed to two sides of the frame body (2);
a forehead pad (41) disposed on an inner side of the frame body(2); and
a cover (43) configured to block external light rays.

9. The head mounted display (10) as claimed in claim 1, **characterized in that** each of the display lenses (1), the first lens unit (11) and the second lens unit (12) is composed of at least one of glass, resin and polycarbonate.

10. The head mounted display (10) as claimed in claim 1, **characterized in that** a chip is built in the frame body, and the chip further comprises:
a wireless module (51) configured to receive a wireless signal;
a processor (52) configured to calculate data;
a memory (53) configured to store the data; and
a flash memory (54) configured to temporarily store the data.
